# EUROPEAN PATENT APPLICATION

(11) **EP 1 621 328 A2**
(43) Date of publication of application: **01.02.2006**
(21) Application number: 05015456.6
(22) Date of filing: 15.07.2005
(51) Int. Cl.: B29D 30/60, B29D 30/70

(54) **Method of manufacturing a pneumatic tire**

(30) Priority: 30.07.2004 JP 2004224192
(71) Applicant: Sumitomo Rubber Industries, Ltd., Kobe-shi, Hyogo-ken (JP)
(72) Inventor: Miki, Youjirou, Sumitomo Rubber Industries, Ltd., Kobe-shi Hyogo-ken (JP)
(74) Representative: Manitz, Gerhart

(57) **Abstract**

A method of manufacturing a pneumatic tire comprises making a raw tire (1) and vulcanizing the raw tire. The raw tire (1) comprises a toroidal main body (20) and a tread ring (21). The tread ring (21) comprises a tread reinforcing belt (15) and a raw tread rubber (14) disposed on the radially outside of the tread reinforcing belt. The making of the tread ring (21) comprises: using a forming drum (D) which is provided with a pair of lateral cylindrical surfaces (DS) and a central cylindrical surface (40S) therebetween to define a depression (40) having a depth and a width; winding the tread reinforcing belt (15) on a central cylindrical surface (40S) so that the edges of the tread reinforcing belt are placed in edge zones (40E) of the depression (40); and forming the tread rubber (14) by winding at least one rubber tape (30) on a winding face (S) which is formed by said lateral cylindrical surfaces (DS) and the outer circumferential surface (15S) of the tread reinforcing belt (15) wound within the width of the depression, wherein in said edge zones, the depth of the depression is substantially the same as the thickness of the tread reinforcing belt.

## Description

The present invention relates to a method of manufacturing a pneumatic tire including a tread rubber formed by winding a number of times a thin narrow rubber tape.

In manufacturing a pneumatic tire, a raw tire (a) is first formed, and then the raw tire (a) is vulcanized in a mold.

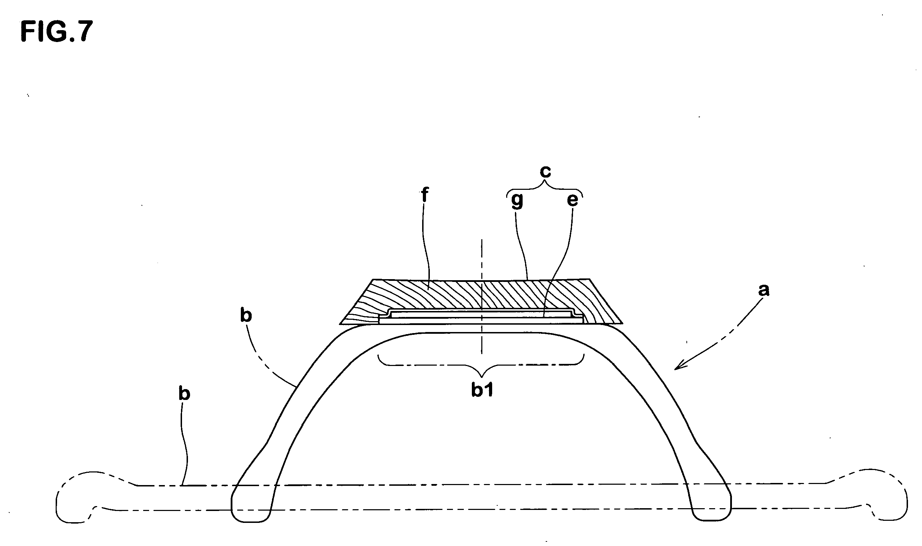

In a process of making a raw tire (a) for a radial tire especially, usually, as shown in Fig.7, a main body (b) including a carcass, which is first formed in a cylindrical shape, is swelled into a toroidal shape so that the crown portion (b1) thereof adheres to the inside of a raw tread ring (c) disposed therearound. Here, the raw tread ring (c) is an assembly of a tread reinforcing belt (e) and a tread rubber (g).

conventionally, a raw tread ring (c) is formed by winding a tread reinforcing belt (e) around a cylindrical surface of a forming drum (d) and then applying a wider tread rubber strip (g) to the outside of the belt (e).

Recent years, instead of using a tread rubber strip (g) extruded, the use of a tread rubber made of a number of windings of a narrow thin rubber tape (f) as shown in Figs.7 and 8 has been proposed in Japanese patent application publication Nos.2000-94542 and 2002-79590.

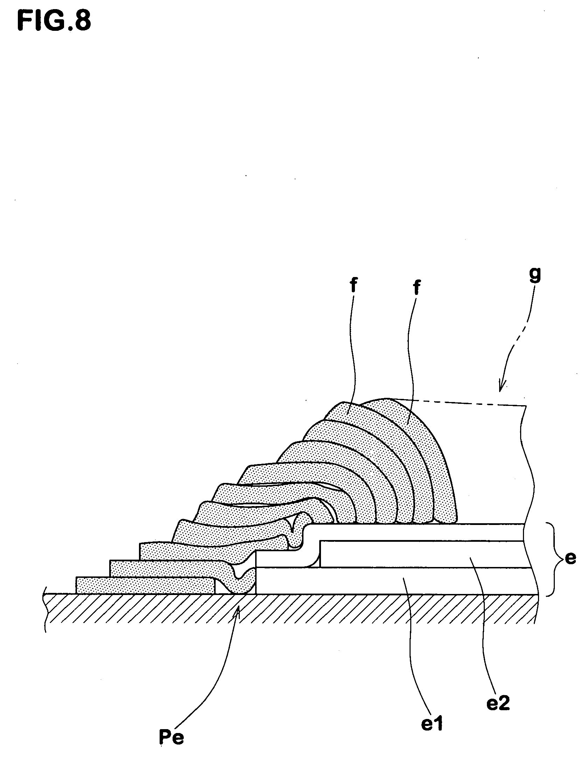

However, if a rubber tape (f) is wound on the tread reinforcing belt (e) in order to make a tread rubber wider than the belt, the windings of the tape are liable to be disordered in a position (pe) near the edges of the belt (e) as shown in Fig.8. As a result, there is a possibility that the vulcanized tire has a defect interiorly such as bareness of rubber.

A main cause of the disorder is considered as a step between the outer circumferential surface of the forming drum (d) and the outer circumferential surface of the belt (e) which step is formed by the edges of the belt (e).

on the other hand, during winding the belt prior to winding the tread rubber tape, the belt edges are liable to meander slightly due to variation of the winding tension, variation of the positioning and the like. Such meandering furthers the above-mentioned disorder.

It is therefore, an object of the present invention to provide a method of manufacturing a pneumatic tire, in which the disorder of the tread rubber tape windings can be effectively prevented.

According to the present invention, a method of manufacturing a pneumatic tire comprises making a raw tire, and vulcanizing the raw tire, wherein
the raw tire comprises a toroidal main body and a tread ring disposed on the crown portion of the toroidal main body,
the toroidal main body comprises a carcass and raw rubber components,
the tread ring comprises a tread reinforcing belt and a raw tread rubber disposed on the radially outside of the tread reinforcing belt,
the making of the raw tire comprises making the tread ring, the making of the tread ring comprises:
using a forming drum which is provided with a pair of lateral cylindrical surfaces and a central cylindrical surface therebetween to define a depression having a depth and a width;
winding the tread reinforcing belt on a central cylindrical surface so that the edges of the tread reinforcing belt are placed in edge zones of the depression; and
forming the tread rubber by winding at least one rubber tape on a winding face which is formed by said lateral cylindrical surfaces and the outer circumferential surface of the tread reinforcing belt wound within the width of the depression, wherein, in said edge zones, the depth of the depression is substantially the same as the thickness of the tread reinforcing belt.

Embodiments of the present invention will now be described in detail in conjunction with the accompanying drawings.
Fig.1 is a cross sectional view of a raw tire according to the present invention.
Fig.2 is a cross sectional view for explaining a process of making a main body in a cylindrical shape and a process of swelling the main body into a toroidal shape to combine with a tread ring.
Fig.3 is a cross sectional view for explaining a process of winding a tread rubber tape to make the tread ring by the use of a forming drum provided with a depression.
Figs.4(a), 4(b) and 4(c) are schematic cross sectional views like Fig.3, each showing an example of the stroke of the rubber tape during winding.
Fig.5 is a schematic cross sectional views like Fig.3, showing an example of the winding of the rubber tapes to provide the tread rubber having a multilayered structure.
Fig.6 is a cross sectional view of a forming drum used to make the tread ring, wherein an upper half shows its expanded state, and a lower half shows its contracted state.
Fig.7 is a cross sectional view for explaining a commonly used method for making a raw tire.
Fig.8 is an enlarged cross sectional view for explaining a problem to be solved by the invention.

According to the present invention, a method of manufacturing a pneumatic tire comprises forming a raw tire 1 and vulcanizing the raw tire 1 in a mold.

In this embodiment, the pneumatic tire is a radial tire comprises a tread portion 2,a pair of sidewall portions 3, a pair of axially spaced bead portions 4 each with a bead core therein, a carcass 6 extending between the bead portions, a tread reinforcing belt 15 disposed radially outside the carcass in the tread portion, and rubber components. The rubber components include: a tread rubber 14 disposed on the belt 15; a crack-resistant sidewall rubber 9 disposed on the axially outside of the carcass in the sidewall portion to define the outer surface of the sidewall portion 3; and a wear-resistant bead rubber 8 disposed in the bead portion along the axially outside and bottom of the bead portion to define the outer surface of the bead portion 4.

The carcass 6 is composed of at least one ply of cords arranged radially at an angle in the range of from 70 to 90 degrees with respect to the tire circumferential direction and extending between the bead portions 4 through the tread portion 2 and sidewall portions 3.

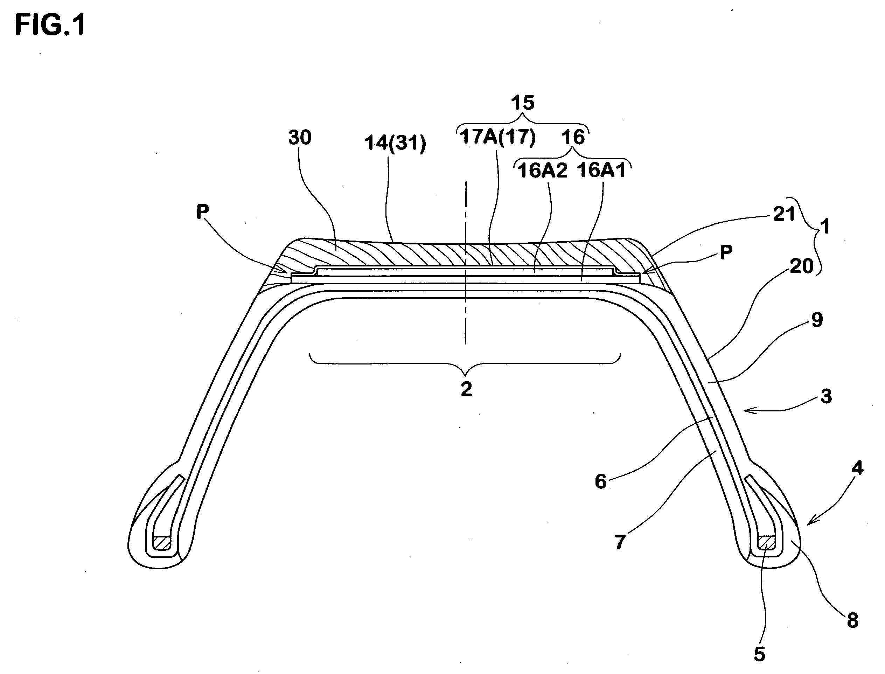

Fig.1 show a raw tire 1 which is put in the mold and vulcanized into the radial tire.

The raw tire 1 comprises a toroidal main body 20 including at least the carcass 6, and a tread ring 21 disposed in the crown portion (corresponding to the tread portion 2) of the main body 20.

In this example, the main body 20 includes the carcass 6, the bead cores 5 around which the carcass 6 is wound to be secured thereto, the bead rubber 8, the sidewall rubber 9, and an inner liner 7 made of an air-impermeable rubber disposed inside the carcass to cover the inner surface of the tire.

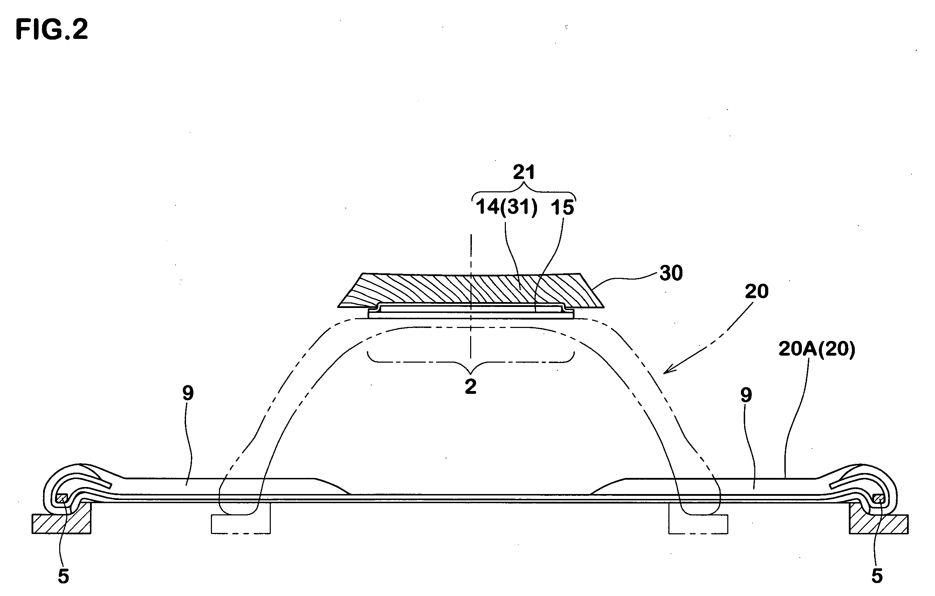

As shown in Fig.2, the main body 20 is first formed as a cylindrical body 20A on a tire building drum. Then, by applying a pressure to the inside of the cylindrical body 20A, the portion between the bead cores 5 is swelled into a toroidal shape so that the crown portion of the main body 20 is pressed onto the inner circumferential surface of the raw tread ring 21. Thus, the tread ring 21 and the main body 20 are adhered and the raw tire 1 is formed.

In Fig.2, the sidewall rubber 9 is already applied to the outer surface of the carcass 6 in the cylindrical state of the tire building drum. Thus, the edge of the sidewall rubber 9 becomes radially inside the tread rubber edge. But according to the overlapping structure or the order of the overlapped components, the sidewall rubber 9 can be applied to the outer surface of the carcass 6 in a state that the tire main body 20 is swelled and combined with the tread ring 21 so that the edge of the sidewall rubber 9 becomes radially outside the tread rubber edge. Further, it is also possible to apply the sidewall rubber 9 to the outer surface of the carcass 6 in a state that the tire main body 20 is swelled but the tread ring 21 is not yet combined.

The raw tread ring 21 is separately formed and disposed radially outside the crown portion in advance of the swelling.

As shown in Fig.1, the raw tread ring 21 is made up of: the belt 15 contacting the crown portion 2 of the raw tire main body 20; and the tread rubber 14 disposed on the radially outside of the belt 15.

The belt 15 include a breaker 16 disposed on the radially outside of the carcass and/or a band 17. The major difference between the breaker and band is the cord angle as explained hereinafter.

The breaker 16 is composed of at least two cross plies 16A of parallel cords laid at an angle of 5 to 45 degrees with respect to the tire equator. The band 17 is composed of a ply 17A of a spirally wound cord or spirally wound parallel cords. Thus, the cord angle is almost zero or less than 5 degrees with respect to the tire equator.

The belt 15 may be the breaker 16 only. The belt 15 may be the band 17 only in the case of the motorcycle tires for example. The breaker 16 may be composed of three or more plies 16A for example in the case of light truck tires, heavy duty tires and the like.

In the case that both of the breaker 16 and band 17 are included, the band 17 is disposed on the radially outside of the breaker so as to cover at least the edge portions of the breaker 16. In the case that the breaker 16 is not included, the band 17 may be a full-width band extending across the substantially overall tread width.

In this example, the belt 15 includes a band 17 made up of a full-width band ply 17A, and a breaker 16 made up of two cross breaker plies 16A1 and 16A2. The radially inner breaker ply 16A1 is 5 to 40 mm wider than the radially outer breaker ply 16A2 in order to prevent a stress concentration. The band ply 17A extends across the overall width of the breaker 16 or the widest breaker ply 16A1 and the edges of the band ply 17A are substantially aligned with the edges of the radially inner breaker ply 16A1.

Each of the breaker plies 16A1 and 16A2 is formed by winding a strip of rubberized cord fabric in a single thickness and the circumferential ends are slightly overlapped to be jointed each other.

The band ply 17A is formed by spirally winding a single cord coated with topping rubber or a tape of topping rubber in which parallel cords are embedded along the length thereof. In this example, the tape is wound in a single thickness. In this example, the widest inner breaker ply 16A1 and band ply 17A define the width WB of the belt 15.

The tread rubber 14 is formed by overlap winding a rubber tape 30 on the belt 15. Thus, the tread rubber 14 is the windings 31 of the rubber tape.

In order to prevent the disorder of the windings 31 occurring in the position P near the edges of the belt 15, a forming drum D provided with a depression 40 is used in making the tread ring 21.

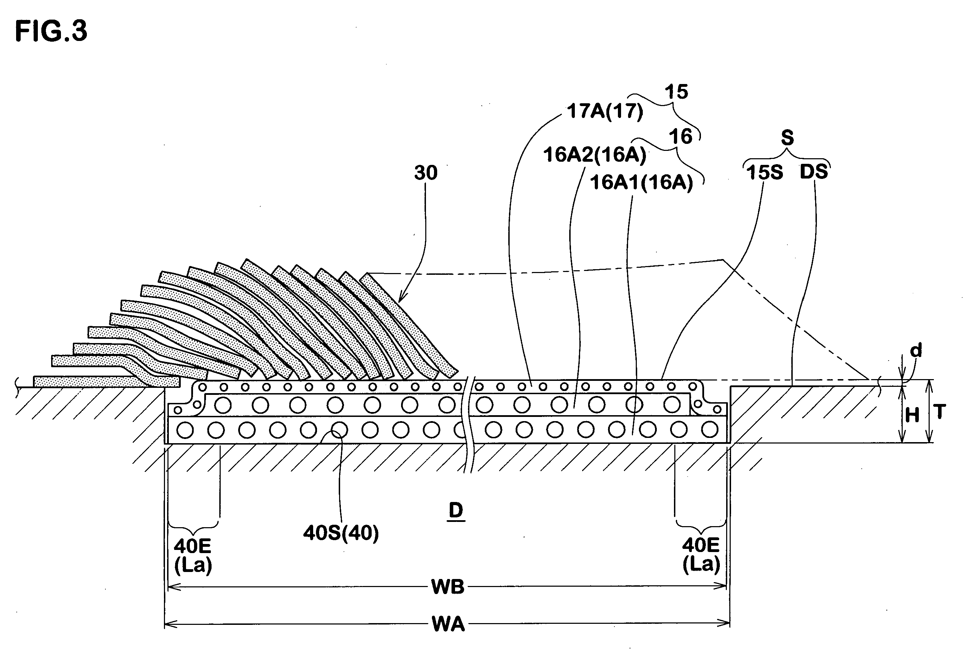

The forming drum D has cylindrical surfaces around which the above-mentioned components are wound. The cylindrical surfaces are, as shown in Fig.3, a central cylindrical surface 40S having a smaller diameter, and a pair of lateral cylindrical surfaces DS having a larger diameter. Thus, the depression 40 is formed by the central cylindrical surface.

The belt 15 is wound on the central cylindrical surface 40S within the width of the depression 40. In the edge zone 40E, the depth H of the depression 40 is substantially the same as the thickness T of the belt 15, namely, the depth H is set in the range of from 80 to 120% of the thickness T. Therefore, the radial distance (d) between the lateral cylindrical surfaces DS and the radially outer surface 15S of the belt 15 in the edge zone 40E of the depression 40 is decreased to less than the thickness T of the belt in the edge zone 40E. Here, the edge zone 40E is a zone in which all the edges of the belt (breaker and/or band) are placed. Practically, however, the edge zone 40E may be defined as extending from each edge of the depression 40 by an axial distance La of 10% of the axial width WA of the depression 40. Between the edge zones 40E, the central cylindrical surface 40S may be curved convexly for example such that the depth measured from the lateral cylindrical surfaces DS becomes less than 80 % of the thickness T. It is important to set the depth within the above-mentioned range in the edge zones 40E, but it is not important between the edge zones 40E.

The above-mentioned rubber tape 30 is wound on a winding face S which is collectively formed by the lateral cylindrical surfaces DS and the radially outer surface 15S of the belt 15. As the difference in diameter between the surfaces DS and 15S is decreased due to the depression 40, the winding face S becomes flatter in the belt edge portion, and as result, the disorder can be prevented and also the winding accuracy can be improved. Further, as the depression 40 functions as a guide in winding the belt, the meandering of the breaker edges is prevented and the disorder and a deterioration of the tire uniformity caused therefrom can be reduced. For this purpose, it is desirable that the axial width wA of the depression 40 is 0.5 to 2.0 mm wider than the axial maximum width wB of the belt 15, namely, 0.5mm =< WA-WB =< 2.0mm. If the difference (wA-wB) is less than 0.5 mm, it is difficult to wind or apply the breaker strip (15) within the width of the depression 40 and accordingly the workability is decreased. If the difference (WA-WB) is more than 2.0 mm, it becomes difficult to prevent the meandering.

As to the cross-sectional shape of the rubber tape 30, aside from a rectangular shape having a substantially constant thickness Ts, a shape whose thickness Ts is gradually decreased from the center to the both sides such as a crescent shape can be used. In any case, it is preferable that the width ws of the rubber tape 30 is set in the range of 5 to 20 mm, and the thickness Ts thereof is set in the range of from 0.5 to 2.0 mm.

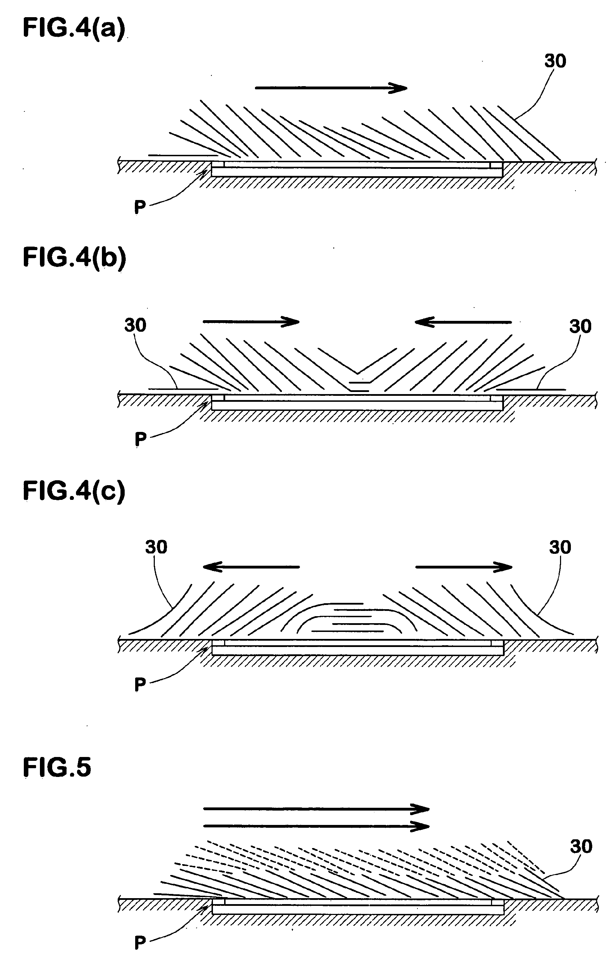

As to the stroke of the tape during winding, as shown in Fig.4(a), it is possible to wind a single rubber tape 30 continuously from one of the edges to the other. Further, as shown in Fig.4(b),two rubber tapes 30 can be wound simultaneously from the edges to the center. Furthermore, as shown in Fig.4(c), two rubber tapes 30 can be wound simultaneously from the center to the edges.

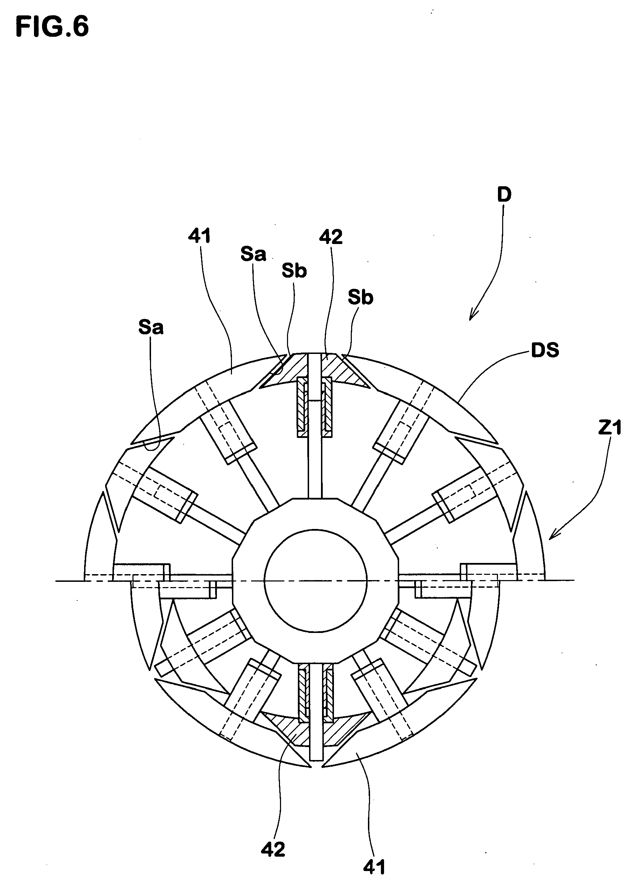

on the other hand, as shown in Fig.5, it is also possible to wind rubber tapes so that the tread rubber has a multilayered structure. For example, a radially inner layer is wound on the winding face S firstly as explained above, and then a radially outer layer is wound on the radially inner layer in order to form a two-layered structure. Similarly it is also possible to provide a three-layered structure.

After the belt 15 is wound, to place the tread ring 21 around the main body 21, the tread ring 21 is removed from the forming drum D. Therefore, the forming drum D is contractible more than the maximum of the depth H.

In this example, as shown in Fig.6, the forming drum D comprises first segments 41 and second segments 42 which are arranged alternately in the circumferential direction. The first segment 41 has circumferential end surfaces sa inclined toward the center in the course from the radially outside to the inside. Contrary, the second segment 42 has circumferential end surfaces sb inclined toward the center in the course from the radially inside to the outside. The first and second segments 41 and 42 are supported movably such that the segments 41 and 42 can move radially between the contracted state and the expanded state Z1, utilizing suitable means, e.g. link mechanics, cylinders and the like. In the expanded state Z1, as an upper half of Fig.6, the reversely inclined adjacent side surfaces sa and sb substantially contact with each other, and the radially outer surfaces of the segments 41 and 42 collectively form the central cylindrical surface 40S and lateral cylindrical surfaces DS. In the contracted state, as a lower half of Fig.6, the second segments 42 are moved radially inwardly more than the first segments 41, and the maximum diameter of the lateral cylindrical surfaces DS in the contracted state becomes less than the minimum diameter of the central cylindrical surface 40S in the expanded state Z1.

In this example, the forming drum D is constructed such that both of the lateral cylindrical surface DS and the central cylindrical surface 40S are decreased in the diameter in the contracted state. However, it is also possible to decrease the diameter of the portion other than the central cylindrical surface 40S, namely, the diameter of the lateral cylindrical surfaces DS only, down to the same or smaller value than the minimum diameter of the central cylindrical surface 40S in the expanded state Z1.

In the tire meridian section, the central cylindrical surface 40S can be provided with a curvature corresponding to the tread profile. Further, the central cylindrical surface 40S and the lateral cylindrical surfaces DS can be profiled in accordance with the profiles of the corresponding portions in the vulcanized tire.

### Comparison tests

Radial tires of size 215/45ZR17 for passenger cars were manufactured experimentally, using tread rings made by the use of various forming drums provided with the depression as shown in Fig.3 and a forming drum provided with no depression as shown in Fig.8. The specifications of the forming drums are shown in Table 1.

Then, the outer surface of each test tire was visual checked for defect using 30 samples and evaluated into three ranks A, B and C as follows:
A: no defect
B: small defect (no need of repair)
c: large defect (need of repair)

Further, the radial force variation RFV(overall) of each tire was measured according to JASO c607 using a tester. The average value for 30 samples per tire is shown in Table 1.

**Table 1**

| Tire | Ref.1 | Ex.1 | Ex.2 | Ex.3 | Ex.4 | Ex.5 | Ex.6 | Ex.7 | Ex.8 |
|---|---|---|---|---|---|---|---|---|---|
| Forming drum | | | | | | | | | |
| Depression | none | | | | | | | | |
| Width WA (mm) | 0 | 197 | 198 | 199 | 197 | 197 | 197 | 197 | 197 |
| Depth H (mm) | 0 | 3.1 | 3.1 | 3.1 | 2.7 | 2.5 | 2.3 | 3.5 | 3.7 |
| Belt | nylon | nylon | nylon | nylon | nylon | nylon | nylon | nylon | nylon |
| Width WB (mm) | 196 | 196 | 196 | 196 | 196 | 196 | 196 | 196 | 196 |
| Thickness T (mm) | -- | 3.1 | 3.1 | 3.1 | 3.1 | 3.1 | 3.1 | 3.1 | 3.1 |
| WA-WB (mm) | -- | 1 | 2 | 3 | 1 | 1 | 1 | 1 | 1 |
| T-H (mm) | -- | 0 | 0 | 0 | 0.4 | 0.6 | 0.8 | -0.4 | -0.6 |
| H/T (%) | -- | 100 | 100 | 100 | 87 | 80.6 | 74 | 113 | 119 |
| Defect (Number of occurrence) | | | | | | | | | |
| A | 23 | 26 | 27 | 26 | 26 | 25 | 24 | 25 | 24 |
| B | 4 | 4 | 3 | 4 | 3 | 3 | 4 | 4 | 3 |
| C | 3 | 0 | 0 | 0 | 1 | 2 | 2 | 1 | 3 |
| RFV (Newton) | 62 | 33 | 37 | 40 | 35 | 37 | 40 | 37 | 40 |

## Claims

1. A method of manufacturing a pneumatic tire comprising
making a raw tire, the raw tire comprising a toroidal main body and a tread ring disposed on the crown portion of the toroidal main body, the toroidal main body comprising a carcass and raw rubber components, and the tread ring comprising a tread reinforcing belt and a raw tread rubber disposed on the radially outside of the tread reinforcing belt, and
vulcanizing the raw tire,
wherein
the making of the raw tire comprises making the tread ring, and
the making of the tread ring comprises:
using a forming drum which is provided with a pair of lateral cylindrical surfaces and a central cylindrical surface therebetween to define a depression having a depth and a width;
winding the tread reinforcing belt on a central cylindrical surface so that the edges of the tread reinforcing belt are placed in edge zones of the depression; and
forming the tread rubber by winding at least one rubber tape on a winding face which is formed by said lateral cylindrical surfaces and the outer circumferential surface of the tread reinforcing belt wound within the width of the depression,
wherein, in said edge zones, the depth of the depression is substantially the same as the thickness of the tread reinforcing belt.

2. The method according to claim 1, wherein
the depth of the depression is in a range of from 80 to 120 % of the thickness T of the belt.

3. The method according to claim 1 or 2, wherein
the width of the depression is from 0.5 to 2.0 mm larger than the width of the tread reinforcing belt.

4. The method according to claim 1, wherein
the tread reinforcing belt comprises a breaker made of cords laid at an angle of from 5 to 45 degrees with respect to the tire equator.

5. The method according to claim 1, wherein
the tread reinforcing belt comprises a band made of a spirally wound cord.

6. The method according to claim 1, wherein
the tread reinforcing belt includes
a breaker comprising two cross plies of cords laid at an angle of from 5 to 45 degrees with respect to the tire equator and
a band comprising a ply of at least one spirally wound cord disposed on the breaker.
